# EUROPÄISCHE PATENTSCHRIFT

(11) **EP 3 153 820 B1**
(45) Veröffentlichungstag und Bekanntmachung des Hinweises auf die Patenterteilung: **27.09.2023**
(21) Anmeldenummer: 16173734.1
(22) Anmeldetag: 09.06.2016
(51) Int. Cl.: G01D 3/02, G01D 3/08, G01D 18/00, G01D 21/00, G01F 23/00

(54) **MESSGERÄT UND MESSANORDNUNG**
MEASURING DEVICE AND MEASURING ASSEMBLY
APPAREIL DE MESURE ET AGENCEMENT DE MESURE

(30) Priorität: 16.09.2015 DE 102015115614
(43) Veröffentlichungstag der Anmeldung: 12.04.2017
(73) Patentinhaber: Krohne Messtechnik GmbH, 47058 Duisburg (DE)
(72) Erfinder: Gerding, Michael, 44805 Bochum (DE); Schäfer, Björn, 44892 Bochum (DE)
(74) Vertreter: Gesthuysen Patentanwälte

(56) Entgegenhaltungen:
- DE-A1-102006 016 381
- DE-A1-102006 036 646
- DE-A1-102011 080 511
- DE-A1-102013 005 226
- DE-A1-102013 108 532
- DE-A1-102014 102 797
- DE-U1-202006 010 007
- DE-U1-202009 017 430
- US-A1- 2010 131 231
- US-A1- 2011 320 158
- US-A1- 2012 074 972
- US-A1- 2012 310 545
- US-A1- 2014 260 691

## Beschreibung

Die Erfindung betrifft ein Messgerät, mit mindestens einer Sensorvorrichtung, mit einer Verarbeitungsvorrichtung, mit einer Speichervorrichtung, mit einer Schnittstelle und mit einer Steuervorrichtung, wobei das Messgerät einen Messwert für eine Messgröße erzeugt, wobei die Sensorvorrichtung eine mit der Messgröße in Zusammenhang stehende Primärmessgröße erzeugt, wobei die Verarbeitungsvorrichtung ausgehend von in der Speichervorrichtung hinterlegten Berechnungsdaten aus der Primärmessgröße den Messwert für die Messgröße ermittelt und wobei die Steuervorrichtung einen Datenverkehr über die Schnittstelle steuert. Weiterhin bezieht sich die Erfindung auf eine Messanordnung, mit mindestens einem Messgerät zur Erzeugung eines Messwerts für eine erste Messgröße und mit mindestens einem Sekundär-Messgerät zur Erzeugung eines Messwerts für eine zweite Messgröße.

Messgeräte finden in der modernen Prozesstechnik Verwendung, um Prozesse zu überwachen bzw. zu regeln oder zu steuern. Ein beispielhaftes Messgerät ist aus DE 10 2013 005226 A1 bekannt.

Insbesondere bei kritischen Anwendungen ist es erforderlich, dass die einzelnen Messgeräte in Bezug auf ihre Zuverlässigkeit überprüft werden bzw. dass zumindest eine Anpassung an Alterungsprozesse durch eine ggf. erforderliche Re-Kalibrierung stattfindet.

Eine solche Untersuchung der Messgeräte oder idealerweise aller Gerätekomponenten in Bezug auf die korrekte Funktionalität erfolgt insbesondere regelmäßig bzw. in festen Zeitrastern. Die Überwachung kann auch durch im Messgerät selbst vorhandene Mechanismen erfolgen. So ist es beispielsweise bei Messgeräten bekannt, die ausgegebenen Stromsignale zurückzulesen und mit Sollwerten zu vergleichen. Auch werden interne Taktfrequenzen oder Spannungswerte überwacht. Dies gehört weitgehend zum Bereich der Diagnose, wobei in der Regel die eigentlichen Messprozesse nicht unterbrochen werden und die Verfahren automatisch ablaufen.

Weiterhin sind sogenannte Prooftests bekannt, die meist manuell oder zeitgesteuert ausgelöst werden. Hierfür wird üblicherweise der Messbetrieb für die Dauer des Tests unterbrochen oder es werden sogar die Messgeräte von ihrem jeweiligen Messort ausgebaut. Das Ausbauen erlaubt anschließend beispielsweise das Testen des Messgeräts unter den wohldefinierten Bedingungen eines Labors oder das Untersuchen von einzelnen Komponenten, wofür eine Demontage des Messgeräts erforderlich ist.

Ein großer Unterschied zwischen einer Diagnose der Funktionalität und einem Prooftest ist somit, dass die Diagnose automatisch und in der Regel ohne Unterbrechung des eigentlichen Messprinzips, wohingegen der Prooftest manuell oder insbesondere im off-line-modus des Messgeräts stattfindet.

Meist sind Messgeräte nicht allein in einem Prozess vorhanden, sondern sie bilden mit anderen Einheiten, Geräten oder Vorrichtungen eine Messanordnung, die in einer entsprechenden Prozessumgebung angesiedelt ist. Solche Messanordnungen können den Vorteil bieten, dass sich einzelne Messgeräte im Sinne von Redundanz bzw. Diversität ergänzen.

Ein Messgerät zur Messung mindestens einer Messgröße bzw. zur Erzeugung eines Messwerts für die Messgröße verfügt dabei in aller Regel zumindest über eine Sensorvorrichtung, eine Verarbeitungsvorrichtung, eine Speichervorrichtung, eine Schnittstelle und eine Steuervorrichtung.

Bei der Messgröße handelt es sich beispielsweise um Füllstand, Durchfluss, Massendurchfluss, Druck, Viskosität, pH-Wert, Temperatur oder Leitfähigkeit. Die Sensorvorrichtung erzeugt eine mit der Messgröße in Zusammenhang stehende Primärmessgröße, die von der Verarbeitungsvorrichtung verarbeitet wird. Insbesondere erzeugt die Verarbeitungsvorrichtung ausgehend von Berechnungsdaten, die in der Speichervorrichtung hinterlegt sind, aus der Primärmessgröße den Messwert.

Der Steuerung der Messungen wird von der Steuervorrichtung vorgenommen. Die Steuervorrichtung regelt insbesondere auch den Datenverkehr über die Schnittstelle, also die Ausgabe der Messwerte oder das Abfragen und Einlesen von weiteren externen Daten.

Das Messgerät wird dabei in Bezug auf die funktionale Aufteilung der einzelnen Komponenten beschrieben. Dies muss jedoch so nicht in der konkreten Umsetzung stattfinden, sondern es kann auch eine Einheit beispielsweise die Verarbeitungsvorrichtung und die Steuervorrichtung umfassen, wobei die Speichervorrichtung ggf. auch direkt eingebaut ist.

Unter einer Messanordnung sei im Weiteren eine Kombination aus mindestens zwei Messgeräten verstanden. Dabei handelt es sich um ein Messgerät zur Erzeugung eines Messwerts für eine erste Messgröße. Dieses Messgerät ist das zuvor beschriebene Messgerät, wobei die Messgröße, die das Messgerät messen soll, hier die erste Messgröße ist. Weiterhin ist mindestens ein Sekundär-Messgerät zur Erzeugung eines Messwerts für eine zweite Messgröße vorhanden. Das Messgerät für die erste Messgröße könnte daher auch als Primär-Messgerät bezeichnet werden.

Der Erfindung liegt die Aufgabe zugrunde, ein Messgerät und eine Messanordnung vorzuschlagen, die eine vereinfachte Überprüfung der Funktionalität des Messgeräts bzw. eines Messgeräts als Teil einer Messanordnung erlauben.

Das erfindungsgemäße Messgerät ist in Anspruch 1 definiert.

In einer Ausgestaltung folgt dabei eine solche Re-Kalibrierung einem Prooftest, insofern das Vergleichsergebnis eine Abweichung zwischen dem Referenzwert und dem vom Messgerät gemessenen Messwert bedeutet. Es wird also erkannt, dass die Messwerte nicht mehr optimal sind und es wird anschließend die Anpassung vorgenommen. Dabei wird in einer Ausgestaltung eine wiederholte deutliche Änderung der Kalibrierwerte als Anzeichen für eine Alterung oder eines Defekts gewertet. Ergänzend oder alternativ werden in einer Ausgestaltung Abweichungen der Kalibrierwerte über einen gewissen maximalen Grenzwert hinaus als Anzeichen für einen Gerätedefekt gewertet.

In einer Ausgestaltung handelt es sich bei der Messgröße um den Füllstand eines Mediums in einem Behälter. In einer damit einhergehenden Ausgestaltung erlaubt das Messgerät die kontinuierliche Messung des Füllstands. Die extern bereitgestellten Daten, die in diesem Fall vorzugsweise extern bereitgestellte Messwerte sind, werden in einer Ausgestaltung von einem Grenzstandschalter abfragt. Das Messgerät ist also mit einem Grenzstandschalter - zumindest temporär - verbunden und die Steuervorrichtung fragt als extern bereitgestellte Daten die Signale des Grenzstandschalters ab, der mitteilt, ob ein Grenzstand erreicht ist oder nicht.

Das obige Messgerät stellt eine deutliche Vereinfachung des Prooftests dar.

Insbesondere lässt sich so eine redundante Erfassung von Daten und Messwerten ausnutzen. Vor allem kann ein Ausbau des zu testenden Gerätes vermieden werden.

Die extern bereitgestellten Daten stammen dabei beispielsweise von redundanten Messwertgebern, also anderen Messgeräten, die ebenfalls der Bestimmung der relevanten Messgröße dienen. Dabei kann es sich um gleiche Messgeräte oder um unterschiedliche Messgeräte, z. B. unter der Verwendung von unterschiedlichen Messprinzipien handeln. Weiterhin können auch unterschiedliche Messgeräte miteinander kombiniert werden. So umfassen Durchflussmessgeräte häufig auch Temperatursensoren. Wird ein solches Messgerät mit einem separaten Temperaturmessgerät verbunden, so erlaubt dies die Überprüfung des Temperatursensors, der zum Messgerät gehört.

Weiterhin wird die Aufgabe erfindungsgemäß durch die Messanordnung nach Anspruch 6 gelöst.

In der erfindungsgemäßen Messanordnung empfängt das Messgerät, das in diesem Zusammenhang auch als Primär-Messgerät bezeichnet werden kann, einen Messwert vom Sekundär-Messgerät und verwendet diesen für die eigene Überprüfung. Die Überprüfung kann dabei - wie oben anhand des Messgeräts ausgeführt - darin bestehen, dass im Sinne eines Prooftests der vom Messgerät erzeugte Messwert für die erste Messgröße verglichen wird und zwar entweder - unter der Voraussetzung, dass die erste und die zweite Messgröße gleich sind - direkt mit dem Messwert für die zweite Messgröße oder mit einem aus dem Messwert für die zweite Messgröße ermittelten Messwert für die erste Messgröße. Alternativ kann der Messwert der zweiten Messgröße auch der Re-Kalibrierung des Messgeräts dienen.

In einer Ausgestaltung ist daher vorgesehen, dass die erste Messgröße und die zweite Messgröße identisch sind. Es herrscht somit in Hinblick auf die Messgröße Redundanz.

In diesem Zusammenhang sollen die erste und die zweite Messgröße auch so verstanden werden, dass es sich nicht unbedingt um die Messgröße handelt, für die das jeweilige Messgerät eigentlich ausgelegt ist. Bei dem oben erwähnten Durchflussmessgerät ist beispielsweise der Durchfluss die eigentlich relevante Messgröße. Ist jedoch ein Temperatursensor vorhanden, so kann auch die Temperatur als erste Messgröße dieses Messgeräts verstanden werden.

In einer Ausgestaltung dient das Messgerät zur Erzeugung von kontinuierlichen Messwerten, wohingegen das Sekundär-Messgerät als Grenzstandschalter ausgestaltet ist. In einer weiteren Ausgestaltung sind noch zusätzlich Messgeräte vorgesehen. In einer Variante sind auch mehrere Grenzstandschalter vorhanden.

Die Möglichkeit, dass ein Messgerät unterschiedliche Messgrößen ermittelt und passend kombiniert, realisiert die folgende Ausgestaltung.

Dabei verfügt das Messgerät über eine Sensorvorrichtung sowie eine Sekundärsensorvorrichtung. Die Sensorvorrichtung - die daher auch als Primärsensorvorrichtung bezeichnet werden könnte - dient dabei der Erzeugung einer mit der ersten Messgröße in Zusammenhang stehenden Primärmessgrö-ße. Die Sekundärsensorvorrichtung erlaubt die zur Erzeugung eines Messwerts für die zweite Messgröße. Die zweite Messgröße ist beispielsweise die Temperatur, wobei die erste Messgröße z. B. der Durchfluss, der Füllstand oder der pH-Wert ist.

In einer weiteren Ausgestaltung sind das Messgerät und das Sekundär-Messgerät in einer Prozessumgebung angeordnet. Dies ist beispielsweise eine Prozessanlage, in der sich ein zu überwachendes Medium befindet. Für die Überprüfung des Messgeräts greift das Messgerät auf Daten über die Prozessumgebung zu. Die extern bereitgestellten Daten können daher auch komplexer Natur sein oder es kann sich um eine Vielzahl von Einzeldaten handeln, die entsprechend in dem Messgerät abzuspeichern sind.

Die obigen Ausführungen zum Messgerät gelten hier entsprechend auch für die Messanordnung bzw. lassen sich die Erläuterungen und Ausgestaltungen zu der Messanordnung entsprechend auch auf das erfindungsgemäße Messgerät anwenden, welches insbesondere ein Teil der Messanordnung ist.

In einer Ausgestaltung sind das Messgerät und das Sekundär-Messgerät fest miteinander verknüpft und wissen daher auch umeinander bzw. um die jeweiligen Messwerte.

In einer alternativen Ausgestaltung werden das Messgerät und das Sekundär-Messgerät gezielt für die Durchführung der Überprüfung miteinander verbunden, wobei auch die Auslösung der Abfrage der Daten ggf. durch ein externes Triggersignal erfolgen kann.

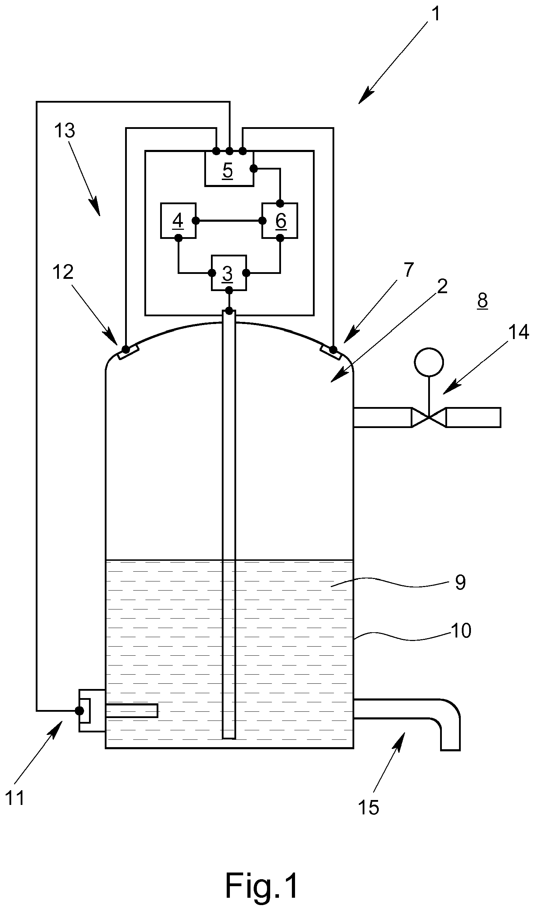

Im Einzelnen gibt es nun eine Vielzahl von Möglichkeiten, die Erfindung auszugestalten und weiterzubilden. Dazu wird verwiesen einerseits auf die den Patentansprüchen 1 und 6 nachgeordneten Patentansprüche, andererseits auf die folgende Beschreibung eines Ausführungsbeispiels in Verbindung mit der Zeichnung. In der Zeichnung zeigt
- Fig. 1: eine schematische Darstellung einer Prozessanlage.

In der Fig. 1 ist schematisch die Anwendung eines Messgeräts 1 zur kontinuierlichen Füllstandsmessung dargestellt. Das Messgerät 1 verfügt dafür über eine Sensorvorrichtung 2, die hier aus einem stabförmigen Wellenleiter zum Führen von elektromagnetischen Signalen besteht. Aus der Laufzeit der Signale wird - wie im Stand der Technik bekannt - der Füllstand ermittelt. Die Bestimmung des Messwerts für die hier beispielhafte Messgröße Füllstand wird von der Verarbeitungsvorrichtung 3 vorgenommen. Für die Ermittlung des Messwerts greift die Verarbeitungsvorrichtung 3 auf eine Speichervorrichtung 4 zu, in der entsprechende Kalibrierdaten, Algorithmen oder Wertetabellen hinterlegt sind. Um die ermittelten Messwerte auszugeben oder um auch Daten zu empfangen, ist eine Schnittstelle 5 vorgesehen, wobei der Datenfluss hier über die Steuervorrichtung 6 erfolgt, die auch auf die Verarbeitungsvorrichtung 3 zugreift.

Die Sensorvorrichtung 2 erzeugt eine Primärmessgröße, aus der der Messwert für die eigentliche Messgröße Füllstand ermittelt wird.

Das Messgerät 1 verfügt ergänzend noch über eine Sekundärsensorvorrichtung 7, die hier als Temperatursensor ausgestaltet ist und deren Messwerte in die Ermittlung der Messwerte für die Messgröße Füllstand einfließen.

Das Messgerät 1 befindet sich insgesamt in einer Prozessumgebung 8 und dient dabei insbesondere der Bestimmung des Füllstands des Mediums 9, bei dem es sich hier beispielhaft um eine Flüssigkeit handeln soll, in einem Behälter 10.

Ergänzend zu dem der kontinuierlichen Füllstandsmessung dienenden Messgerät 1 ist in Nähe des Bodens des Behälters 10 noch ein Sekundär-Messgerät in Form eines Grenzstandschalters 11 vorgesehen. Dieses Sekundär-Messgerät 11 zeigt somit an, ob der mit der Ausgestaltung des Messgeräts 11 und dessen Einbauposition verbundener Füllstand erreicht ist. Es wird also nur eine binäre Aussage erzeugt. Dabei handelt es sich hier beispielsweise um eine sogenannte Schwinggabel, deren mechanische Schwingungen ausgewertet werden.

Insgesamt dient das Messgerät 1 zur kontinuierlichen Messung einer ersten Messgröße und dient das Sekundär-Messgerät 11 als Grenzstandschalter der Messung bzw. speziell der Überwachung einer zweiten Messgröße, wobei die erste und die zweite Messgröße hier gleich und der Füllstand des Mediums 9 sind.

Zusätzlich ist noch ein weiteres Sekundär-Messgerät in Form eines Temperaturmessgeräts 12 vorhanden. Dieses Temperaturmessgerät 12 misst somit als primäre Messgröße die Temperatur, wobei es sich bei der Temperatur für das Messgerät 1 um eine sekundäre Messgröße im Verhältnis zur primären Messgröße Füllstand handelt.

Weiterhin bilden das Messgerät 1 und die in der gezeigten Ausgestaltung zwei Sekundär-Messgeräte 11, 12 eine Messanordnung 13 in der Prozessumgebung 8.

Für eine Änderung des Füllstands des Mediums 9 sind ein Zufluss 14 mit Ventil bzw. ein Abfluss 15 vorgesehen.

Die Steuervorrichtung 6 ist über die Schnittstelle 5 mit dem Sekundär-Messgerät in Form des Grenzstandschalters 11 und mit dem Sekundär-Messgerät in Form des Temperaturmessgeräts 12 verbunden. Zusätzlich ist hier beispielhaft über die Schnittstelle 5 auch die Verbindung zur Sekundärsensorvorrichtung 7 realisiert.

Die Steuervorrichtung 6 fragt über die Schnittstelle 5 extern erzeugte bzw. bereitgestellten Daten und hier speziell Messdaten ab; extern ist dabei relativ zum Messgerät 1 gesehen.

So erhält die Steuervorrichtung 6 beispielsweise vom Grenzstandschalter 11 eine Aussage, ob der Füllstand, der mit der Einbauposition des Grenzstandschalters 11 verbunden ist, erreicht ist.

Von diesem extern bereitgestellten Messwert ausgehend führt das Messgerät 1 eine Überprüfung durch. Dies kann dabei geschehen als Teil eines Prooftests oder als Teil einer Re-Kalibrierung des Messgeräts 1:
Bei dem Prooftest überprüft sich das Messgerät 1 selbst in Hinblick auf seine Zuverlässigkeit. Dabei vergleicht das Messgerät 1 bzw. speziell dessen Steuervorrichtung 6 den extern bereitgestellten Messwert mit einem zugehörigen und vom Messgerät 1 erzeugten Messwert. In dem dargestellten Beispiel wären somit zu vergleichen, dass der Grenzstandschalter 11 eine Bedeckung durch das Medium 9 anzeigt und dass der Messwert des Messgeräts 1 für den Füllstand oberhalb des mit dem Grenzstandschalter 11 assoziierten Füllstands liegt. Ausgehend von dem Vergleich der Messwerte erzeugt die Steuervorrichtung 6 ein Vergleichsergebnis.

Zeigt das Vergleichsergebnis, dass die zwei Messwerte für den Füllstand innerhalb eines vorgebbaren Grenzbereichs, der auch als Toleranzbereich für eine Abweichung verstanden werden kann, liegen, so funktioniert das Messgerät 1 zuverlässig. Unterscheiden sich die zwei Messwerte über den Grenzbereich hinaus, ist also die Abweichung größer als der Toleranzbereich, so gibt in einer Ausgestaltung das Messgerät 1 ein Warnsignal aus und stellt vorzugsweise seine Arbeit ein. In einer alternativen Variante nimmt das Messgerät 1 die Abweichung zum Anlass, um eine Re-Kalibrierung vorzunehmen.

Diese Re-Kalibrierung ist dabei in einer Variante auch die alternative oder ergänzende Realisierung der Überprüfung, die das Messgerät 1 mit dem extern bereitgestellten Messwert vornimmt.

Bei der Re-Kalibrierung wird die Zuordnung der Messwerte des Messgeräts 1 mit den externen Messwerten bzw. mit den real vorliegenden Werten getroffen. Dafür werden entsprechende Verrechnungs- oder allgemein Berechnungsdaten ermittelt und in der Speichervorrichtung 4 als neue Daten hinterlegt. Es werden also die Daten erzeugt, über die die Messwerte des Messgeräts 1 wieder den extern bereitgestellten Messwerten entsprechen.

Da das Messgerät 1 zusätzlich noch mit dem Temperatursensor 12 verbunden ist, kann die Steuervorrichtung 6 somit auch die eigene Sekundärsensorvorrichtung 7 überprüfen und ggf. auch hierfür eine Re-Kalibrierung vornehmen.

Für die Überprüfung des Messgeräts 1 greift die Steuereinheit 6 in einer besonderen Variante auch auf die Prozessdaten der Prozessumgebung 8 zurück. Dabei erhält die Steuereinheit 6 über die Schnittstelle 5 auch Daten über den Zufluss und Abfluss an Medium in bzw. aus dem Behälter heraus. Mit entsprechend hinterlegten Daten über die Geometrie des Behälters und über die Mediumseigenschaften lässt sich der Füllstand berechnen und mit dem über die Sensorvorrichtung 2 ermittelten Messwert für den Füllstand vergleichen.

Daten über die Prozessumgebung 8 beziehen sich in einer weiteren - nicht dargestellten - Variante darauf, dass mehrere Durchflussmessgeräte sich auf den Durchfluss des gleichen Mediums beziehen. Je nach der Anordnung der einzelnen Messgeräte können dann die Messwerte entsprechend miteinander verrechnet werden. Ist beispielsweise ein Messgerät einem Zufluss zugeordnet, der sich in zwei separate Verläufe aufteilt, und ist jedem der Verläufe ein Messgerät zugeordnet, so sollte die Summe der Messwerte der beiden Messgerät gleich dem Messwert des Messgeräts des Zuflusses entsprechen.

## Patentansprüche

1. Messgerät (1), mit mindestens einer Sensorvorrichtung (2), mit einer Verarbeitungsvorrichtung (3), mit einer Speichervorrichtung (4), mit einer Schnittstelle (5) und mit einer Steuervorrichtung (6), wobei das Messgerät (1) einen Messwert für eine Messgröße erzeugt,
wobei die Sensorvorrichtung (2) eine mit der Messgröße in Zusammenhang stehende Primärmessgröße erzeugt und
wobei die Verarbeitungsvorrichtung (3) ausgehend von in der Speichervorrichtung (4) hinterlegten Berechnungsdaten aus der Primärmessgröße den Messwert für die Messgröße ermittelt,
**dadurch gekennzeichnet,**
**dass** die Steuervorrichtung (6) einen Datenverkehr über die Schnittstelle (5) steuert,
**dass** die Steuervorrichtung (6) - insbesondere selbstständig - über die Schnittstelle (5) extern bereitgestellte Daten abfragt und
**dass** die Steuervorrichtung (6) ausgehend von den extern bereitgestellten Daten eine Überprüfung des Messgeräts (1) vornimmt, wobei die Überprüfung darin besteht, dass die Steuervorrichtung (6) aus den extern bereitgestellten Daten einen Referenzwert ermittelt, den Referenzwert mit einem von der Verarbeitungsvorrichtung (3) erzeugten Messwert vergleicht und davon ausgehend ein Vergleichsergebnis erzeugt.

2. Messgerät (1) nach Anspruch 1, **dadurch gekennzeichnet, dass** die Steuervorrichtung (6) im Rahmen eines Prooftests die Überprüfung in der Art vornimmt, dass sie das Vergleichsergebnis erzeugt.

3. Messgerät (1) nach Anspruch 1 oder 2, **dadurch gekennzeichnet, dass** die Steuervorrichtung (6) im Rahmen einer Re-Kalibrierung die Überprüfung in der Art vornimmt, dass sie neue Berechnungsdaten hinterlegt.

4. Messgerät (1) nach einem der Ansprüche 1 bis 3, **dadurch gekennzeichnet, dass** es sich bei der Messgröße um den Füllstand eines Mediums (9) in einem Behälter (10) handelt und dass die Steuervorrichtung (6) die extern bereitgestellten Daten von einem Grenzstandschalter (11) abfragt.

5. Messgerät (1) nach einem der Ansprüche 1 bis 4, **dadurch gekennzeichnet, dass** die Steuervorrichtung (6) in dem Fall, dass das Vergleichsergebnis beinhaltet, dass zwischen dem Referenzwert und dem von der Verarbeitungsvorrichtung (3) erzeugten Messwert eine Abweichung außerhalb eines vorgebbaren Grenzbereichs besteht, eine Re-Kalibrierung vornimmt.

6. Messanordnung (13), mit mindestens einem Messgerät (1) zur Erzeugung eines Messwerts für eine erste Messgröße und mit mindestens einem Sekundär-Messgerät (11, 12) zur Erzeugung eines Messwerts für eine zweite Messgröße,
wobei das Messgerät (1) mindestens eine Sensorvorrichtung (2), eine Verarbeitungsvorrichtung (3), eine Speichervorrichtung (4), eine Schnittstelle (5) und eine Steuervorrichtung (6) aufweist,
wobei das Messgerät (1) den Messwert für die erste Messgröße erzeugt, wobei die Sensorvorrichtung (2) eine mit der ersten Messgröße in Zusammenhang stehende Primärmessgröße erzeugt und
wobei die Verarbeitungsvorrichtung (3) ausgehend von in der Speichervorrichtung (4) hinterlegten Berechnungsdaten aus der Primärmessgröße den Messwert für die erste Messgröße ermittelt,
**dadurch gekennzeichnet,**
**dass** die Steuervorrichtung (6) einen Datenverkehr über die Schnittstelle (5) steuert,
**dass** die Steuervorrichtung (6) - insbesondere selbstständig - über die Schnittstelle (5) extern bereitgestellte Daten abfragt,
**dass** die Steuervorrichtung (6) ausgehend von den extern bereitgestellten Daten eine Überprüfung des Messgeräts (1) vornimmt, wobei die Überprüfung darin besteht, dass die Steuervorrichtung (6) aus den extern bereitgestellten Daten einen Referenzwert ermittelt, den Referenzwert mit einem von der Verarbeitungsvorrichtung (3) erzeugten Messwert vergleicht und davon ausgehend ein Vergleichsergebnis erzeugt und
**dass** das Messgerät (1) mindestens einen von dem Sekundär-Messgerät (11, 12) erzeugten Messwert für die zweite Messgröße empfängt und für eine Überprüfung des Messgeräts (1) verwendet.

7. Messanordnung (13) nach Anspruch 6, **dadurch gekennzeichnet, dass** die erste Messgröße und die zweite Messgröße identisch sind.

8. Messanordnung (13) nach Anspruch 6 oder 7, **dadurch gekennzeichnet, dass** das Messgerät (1) zur Erzeugung von kontinuierlichen Messwerten ausgestaltet ist und dass das Sekundär-Messgerät (11) als Grenzstandschalter ausgestaltet ist.

9. Messanordnung (13) nach einem der Ansprüche 6 bis 8, **dadurch gekennzeichnet, dass** das Messgerät (1) eine Sensorvorrichtung (2) und eine Sekundärsensorvorrichtung (7) aufweist, wobei die Sensorvorrichtung (2) zur Erzeugung einer mit der ersten Messgröße in Zusammenhang stehenden Primärmessgröße dient und wobei die Sekundärsensorvorrichtung (7) zur Erzeugung eines Messwerts für die zweite Messgröße dient.

10. Messanordnung (13) nach einem der Ansprüche 6 bis 9, **dadurch gekennzeichnet, dass** das Messgerät (1) und das Sekundär-Messgerät (11, 12) in einer Prozessumgebung (8) angeordnet sind und dass das Messgerät (1) für die Überprüfung des Messgeräts (1) Daten über die Prozessumgebung (8) heranzieht.

## Claims

1. Measuring device (1) with at least one sensor device (2), with a processing device (3), with a storage device (4), with an interface (5) and with a control device (6), wherein the measuring device (1) generates a measured value for a measured variable,
wherein the sensor device (2) generates a primary measured variable associated with the measured variable,
wherein the processing device (3) determines the measured value for the measured variable based on calculation data from the primary measured variable stored in the storage device (4),
**characterized in**
**that** the control device (6) controls data traffic via the interface (5) that the control device (6) - in particular autonomously - retrieves externally provided data via the interface (5) and
**that** the control device (6) performs a test on the measuring device (1) based on the externally provided data, wherein the test comprises the control device (6) determining a reference value from the externally provided data, comparing the reference value to a measured value generated by the processing device (3) and generating a comparison result based thereupon.

2. Measuring device (1) according to claim 1, **characterized in that** the control device (6) performs the test in the scope of a proof test so that it generates the comparison result.

3. Measuring device (1) according to claim 1 or 2, **characterized in that** the control device (6) performs the test in the scope of a recalibration so that it stores new calibration data.

4. Measuring device (1) according to any one of claims 1 to 3, **characterized in that** the measured variable is the fill level of a medium (9) in a container (10) and that the control device (6) retrieves the externally provided data from a limit level switch (11).

5. Measuring device (1) according to any one of claims 1 to 4, **characterized in that** the control device (6) performs a recalibration in the case that the comparison result indicates that there is a deviation beyond a predetermined threshold between the reference value and the measured value generated by the processing device (3).

6. Measuring arrangement (13) with at least one measuring device (1) for generating a measured value for a first measured variable and with at least one secondary measuring device (11, 12) for generating a measured value for a second measured variable,
wherein the measuring device (1) has at least one sensor device (2), a processing device (3), a storage device (4), an interface (5) and a control device (6)
wherein the measuring device (1) generates the measured value for the first measured variable,
wherein the sensor device (2) generates a primary measured variable associated with the first measured varible and
wherein the processing device (3) determines the measured value for the first measured variable based on calculation data from the primary measured variable stored in the storage device (4),
**characterized in**
**that** the control device (6) controls data traffic via the interface (5) that the control device (6) - in particular autonomously - retrieves externally provided data via the interface (5) and
**that** the control device (6) performs a test of the measuring device (1) based on the externally provided data, wherein the test comprises the control device (6) determining a reference value from the externally provided data, comparing the reference value to a measured value generated by the processing device (3) and generating a comparison result based thereupon, and
**that** the measuring device (1) receives at least one measured value generated by the secondary measuring device (11, 12) for the second measured variable and uses it for testing the measuring device (1).

7. Measuring arrangement (13) according to claim 6, **characterized in that** the first measuring variable and the second measuring variable are identical.

8. Measuring arrangement (13) according to claim 6 or 7, **characterized in that** the measuring device (1) is designed to generate continuous measured values and that the secondary measuring device (11) is designed as a level switch.

9. Measuring arrangement (13) according to any one of claims 6 to 8, **characterized in that** the measuring device (1) has a sensor device (2) and a secondary sensor device (7), wherein the sensor device (2) is used for generating a primary measuring variable associated with the first measuring variable and wherein the secondary sensor device (7) is used for generating a measured value for the second measuring variable.

10. Measuring arrangement (13) according to any one of claims 6 to 9, **characterized in that** the measuring device (1) and the secondary measuring device (11, 12) are arranged in a process environment (8) and that the measuring device (1) uses data about the process environment (8) for testing the measuring device (1).

## Revendications

1. Appareil de mesure (1), comprenant au moins un dispositif de capteur (2), un dispositif de traitement (3), un dispositif de mémoire (4), une interface (5) et un dispositif de commande (6), l'appareil de mesure (1) générant une valeur de mesure pour une grandeur de mesure,
dans lequel le dispositif de capteur (2) génère une grandeur de mesure primaire en relation avec la grandeur de mesure, et
dans lequel le dispositif de traitement (3), en partant de données de calcul stockées dans le dispositif de mémoire (4), détermine la valeur de mesure pour la grandeur de mesure à partir de la grandeur de mesure primaire,
**caractérisé en ce que**
le dispositif de commande (6) commande un trafic de données passant par l'interface (5),
le dispositif de commande (6) interroge - en particulier de manière autonome -des données fournies en externe par l'intermédiaire de l'interface (5), et
le dispositif de commande (6), en partant des données fournies en externe, procède à un contrôle de l'appareil de mesure (1), le contrôle consistant à ce que le dispositif de commande (6) détermine à partir des données fournies en externe une valeur de référence, compare la valeur de référence avec une valeur de mesure générée par le dispositif de traitement (3) et génère un résultat de comparaison sur cette base.

2. Appareil de mesure (1) selon la revendication 1, **caractérisé en ce que** le dispositif de commande (6) procède au contrôle dans le cadre d'un test d'épreuve de façon à générer le résultat de comparaison.

3. Appareil de mesure (1) selon la revendication 1 ou 2, **caractérisé en ce que** le dispositif de commande (6) procède au contrôle dans le cadre d'un réétalonnage de façon à stocker de nouvelles données de calcul.

4. Appareil de mesure (1) selon l'une quelconque des revendications 1 à 3, **caractérisé en ce que** la grandeur de mesure est le niveau de remplissage d'un milieu (9) dans un réservoir (10), et **en ce que** le dispositif de commande (6) interroge les données fournies en externe au niveau d'un détecteur de niveau limite (11).

5. Appareil de mesure (1) selon l'une quelconque des revendications 1 à 4, **caractérisé en ce que** le dispositif de commande (6) procède à un réétalonnage dans le cas où le résultat de comparaison implique qu'il existe un écart en dehors d'une plage limite prédéfinissable entre la valeur de référence et la valeur de mesure générée par le dispositif de traitement (3).

6. Agencement de mesure (13), comprenant au moins un appareil de mesure (1) pour générer une valeur de mesure pour une première grandeur de mesure, et au moins un appareil de mesure secondaire (11, 12) pour générer une valeur de mesure pour une deuxième grandeur de mesure,
dans lequel l'appareil de mesure (1) présente au moins un dispositif de capteur (2), un dispositif de traitement (3), un dispositif de mémoire (4), une interface (5) et un dispositif de commande (6),
dans lequel l'appareil de mesure (1) génère la valeur de mesure pour la première grandeur de mesure,
dans lequel le dispositif de capteur (2) génère une grandeur de mesure primaire en relation avec la première grandeur de mesure, et
dans lequel le dispositif de traitement (3), en partant de données de calcul stockées dans le dispositif de mémoire (4), détermine la valeur de mesure pour la première grandeur de mesure à partir de la grandeur de mesure primaire,
**caractérisé en ce que**
le dispositif de commande (6) commande un trafic de données passant par l'interface (5),
le dispositif de commande (6) interroge - en particulier de manière autonome - des données fournies en externe par l'intermédiaire de l'interface (5),
le dispositif de commande (6), en partant des données fournies en externe, procède à un contrôle de l'appareil de mesure (1), le contrôle consistant à ce que le dispositif de commande (6) détermine à partir des données fournies en externe une valeur de référence, compare la valeur de référence avec une valeur de mesure générée par le dispositif de traitement (3) et génère un résultat de comparaison sur cette base, et
l'appareil de mesure (1) reçoit au moins une valeur de mesure générée par l'appareil de mesure secondaire (11, 12) pour la deuxième grandeur de mesure et l'utilise pour un contrôle de l'appareil de mesure (1) .

7. Agencement de mesure (13) selon la revendication 6, **caractérisé en ce que** la première grandeur de mesure et la deuxième grandeur de mesure sont identiques.

8. Agencement de mesure (13) selon la revendication 6 ou 7, **caractérisé en ce que** l'appareil de mesure (1) est configuré pour générer des valeurs de mesure continues, et **en ce que** l'appareil de mesure secondaire (11) est configuré comme un détecteur de niveau limite.

9. Agencement de mesure (13) selon l'une quelconque des revendications 6 à 8, **caractérisé en ce que** l'appareil de mesure (1) présente un dispositif de capteur (2) et un dispositif de capteur secondaire (7), dans lequel le dispositif de capteur (2) sert à générer une grandeur de mesure primaire en relation avec la première grandeur de mesure, et dans lequel le dispositif de capteur secondaire (7) sert à générer une valeur de mesure pour la deuxième grandeur de mesure.

10. Agencement de mesure (13) selon l'une quelconque des revendications 6 à 9, **caractérisé en ce que** l'appareil de mesure (1) et l'appareil de mesure secondaire (11, 12) sont disposés dans un environnement de processus (8), et **en ce que** l'appareil de mesure (1) fait appel à des données concernant l'environnement de processus (8) pour le contrôle de l'appareil de mesure (1) .
